## Europäisches Patentamt
## European Patent Office
## Office européen des brevets

(11) Veröffentlichungsnummer: **0 062 173**
**B1**

# (12) EUROPÄISCHE PATENTSCHRIFT

(45) Veröffentlichungstag der Patentschrift:
08.06.88

(21) Anmeldenummer: 82101945.2

(22) Anmeldetag: 11.03.82

(51) Int. Cl.⁴: **F 02 F 3/12**, F 02 F 3/00, C 22 F 3/00, C 23 C 8/10

(54) Verfahren zur Herstellung eines Kolbens aus Aluminium mit hartoxidiertem Boden.

(30) Priorität: 08.04.81 DE 3114124

(43) Veröffentlichungstag der Anmeldung:
13.10.82 Patentblatt 82/41

(45) Bekanntmachung des Hinweises auf die Patenterteilung:
08.06.88 Patentblatt 88/23

(84) Benannte Vertragsstaaten:
DE FR GB IT

(56) Entgegenhaltungen:
DE-A-2 921 962
DE-B-2 728 048
FR-A-2 354 450
GB-A-491 974
US-A-3 807 014

E. Bickel, Springer Verlag 1958, Die metallischen Werkstoffe des Maschinenbaues: Aluminium-Verlag GmbH, Düsseldorf 1955, Aluminium-Taschenbuch

(73) Patentinhaber: MAHLE GMBH, Pragstrasse 26- 46
Postfach 50 07 69, D-7000 Stuttgart 50 (DE)

(72) Erfinder: Herrmann, Rüdiger, Albstrasse 12, D-7307 Aichwald 1 (DE)
Erfinder: Schlosser, Detlef, Dipl.- Ing., Asternweg 20, D-7312 Kirchheim/Teck (DE)
Erfinder: Wimmer, Heinz, Glockenturmstrasse 7c, D-7250 Leonberg 7 (DE)

(74) Vertreter: Pfusch, Volker, Dipl.- Ing., MAHLE GMBH Patentabteilung Pragstrasse 26- 46
Postfach 50 07 69, D-7000 Stuttgart 50 (DE)

**Beschreibung**

Die Erfindung betrifft ein Verfahren zur Herstellung eines Kolbens aus Aluminium mit hartoxidiertem Boden nach dem Oberbegriff des Anspruchs 1.

Hartoxidschichten auf den Böden von Kolben für Verbrennungsmotoren haben den Zweck, die Temperatur-Wechselfestigkeit des Kolbenmaterials in den den Verbrennungsgasen ausgesetzten Bodenbereichen des Kolbens zu erhöhen. In dieser Hinsicht haben sich die bis heute üblicherweise aufgebrachten Hartoxidschichten in der Praxis auch recht zufriedenstellend bewährt.

Unbefriedigend ist jedoch in manchen Fällen die Erosionsbeständigkeit der bisher auf Kolbenböden aus AlSi-Legierungen aufgebrachten Hartoxidschichten. Zu unzulässig großen Erosionen kann es insbesondere bei Direkteinspritzermotoren in den Bereichen des Kolbenbodens, in denen die Brennstoffstrahlen auftreffen, kommen.

Als wirksame Erosionsschutzschichten sind in der Vergangenheit lediglich solche aus zusätzlich aufgebrachtem Metall, wie z. B. Nickel und Eisen angesehen worden. Diese Ansicht wurde selbst noch in den beiden nachveröffentlichten Druckschriften (gedruckter Vortrag des XIX. International Fisita Congress vom November 1982 mit dem Titel "Kolbenbelastung bei klopfender Verbrennung" in Volume 1, Seiten 20.0 - 20.6 und US 44 01 726) vertreten.

Hiervon ausgehend liegt der Erfindung die Aufgabe zugrunde, die bisher bekannten Hartoxidschichten zumindest lokal so zu verbessern, daß sie den an sie gestellten Anforderungen bezüglich Erosionsbeständigkeit doch noch genügen können.

Gelöst wird diese Aufgabe durch ein Herstellungsverfahren nach den Merkmalen des kennzeichnenden Teils des Anspruchs 1.

Danach kommt es darauf an, daß das in Hartoxid umzuwandelnde Kolbengrundmaterial einen mittleren linearen Korndurchmesser des eutektischen Siliziums von weniger als 3 μm aufweist und daß zusätzlich auch die beanspruchte Art des Kornfeinungsverfahrens angewendet wird.

Aus der Literaturstelle "Die metallischen Werkstoffe des Maschinenbaus" von Dr. Ing. E. Bickel, zweite neu bearbeitete Auflage, Springer Verlag, Berlin/Göttingen/Heidelberg 1958, Seiten 81 und 406 ist es zwar allgemein bekannt, daß feinkörnige Gefüge gute physikalische Eigenschaften u. a. hinsichtlich Festigkeit, Härte und Fähigkeit besitzen. Nicht erwähnt ist dort jedoch die genaue Grenze der bei gegossenen Al-Si-Legierungen einzuhaltenden Feinkörnigkeit, die erfindungsgemäß in bezug auf den linearen Korndurchmesser des eutektischen Siliziums unbedingt bei Werten von weniger als 3 μm liegen muß. Ein solcher Grenzwert und dessen Bedeutung für die Lösung der erfindungsgemäßen Aufgabe kann dieser Literaturstelle nicht entnommen werden. Denn allgemein werden bereits Gefüge als feinkörnig bezeichnet, bei denen der mittlere Korndurchmesser bei etwa 5 - 8 μm liegt.

Nicht entnehmbar aus der vorstehend zitierten Literaturstelle sind auch die zur Erreichung der Kornfeinung erfindungsgemäß beanspruchten Verfahren, deren Anwendung zur Erreichung des erfindungsgemäßen Zieles ebenfalls notwendig ist. So sind insbesondere Kornfeinungsverfahren, bei denen das Gefüge durch Legierungszusätze veredelt wird, wie sie als Beispiele auf Seite 406 der vorgenannten Literaturstelle beschrieben sind, bei Kolbenbodenmaterial ungeeignet. Denn ein veredeltes Gefüge weist eine relativ schlechte Temperaturwechselbeständigkeit auf, die gerade am Kolbenboden von höchster Wichtigkeit ist.

Übliche ohne Legierungszusätze gegossene Al-Si-Kolbenlegierungen besitzen dagegen in der Regel nur ein Gefüge mit einem mittleren linearen Korndurchmesser des eutektischen Siliziums zwischen etwa 5 und 8 μm. Solche allgemein bereits als feinkörnig bezeichneten und für eine Oxidationsbehandlung als geeignet empfohlene Gefüge sind u. a. z. B. angegeben in dem Aluminium-Taschenbuch, 11. Auflage, Herausgeber: Aluminium Zentrale e. V., Aluminium-Verlag GmbH, Düsseldorf, 1955, Seite 589.

Auf solche Gefüge in üblicher Weise aufgebrachte Hartoxidschichten weisen in der Praxis nicht die für die im Einsatz bei Kolben für Verbrennungsmotoren erforderliche Erosionsbeständigkeit auf. Das gilt insbesondere bei Verwendung von Böden von Kolben für Direkteinspritzer-Motoren. In diesen Einsatzfällen führt die Erosion bereits nach relativ niedrigen Betriebszeiten zu einer nahezu vollständigen Zerstörung der aufgebrachten Hartoxidschichten. Verändert man nun erfindungsgemäß bei gleichem Kolbengrundwerkstoff das Korngefüge in den Bereichen des Werkstoffes, der in die aufzubringende Hartoxidschicht umgewandelt wird, in der Art, daß dort der mittlere lineare Korndurchmesser des eutektischen Siliziums zumindest unter 3 μm liegt, so wird das Erosionsverhalten der Schicht unerwartet stark verbessert. Die Verbesserung wird um so größer, je kleiner der betreffende Korndurchmesser eingestellt wird. Nahezu optimale Ergebnisse liegen vor, wenn der genannte Korndurchmesser 2,5 μm unterschreitet. Zur Erzielung des erfindungsgemäßen Ergebnisses reicht es meist aus, daß tatsächlich nur der Bereich des Kolbengrundmaterials derart korngefeint wird, der in die aufzubringende Hartoxidschicht umgewandelt wird, wobei das Kornfeinen durch eine lokale Umschmelzhandlung mittels Ladungsträgerstrahlen, z. B. Lichtbogen oder Elektronenstrahlen erfolgt.

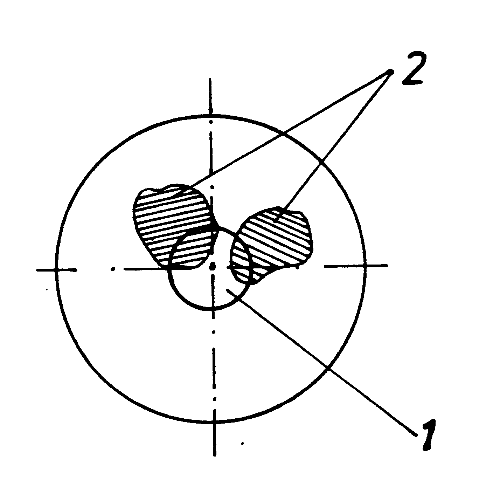

Anhand des in der Zeichnung dargestellten Ausführungsbeispieles wird die Erfindung nachfolgend noch näher erläutert.

In der Zeichnung dargestellt ist die Draufsicht auf den Boden eines Kolbens mit einer Verbrennungsmulde 1. Das Kolbengrundmaterial ist eine Al-Si-Legierung folgender Zusammensetzung in Gewichtsprozent: 11-13 Si; 0,8-1,5 Cu; 0,8-1,3 Mg; bis 1,3 Ni; bis zu 0,7 Fe; bis zu 0,2 Ti; bis zu 0,3 Mn; bis zu 0,3 Zn; Rest Al. Die Verarbeitung des Materials in die Rohform des Kolbens erfolgt durch Gießen. Das Gefüge des Materials zeichnet sich aus durch einen mittleren linearen Korndurchmesser des eutektischen Siliziums zwischen etwa 5 und 8 μm. Vor dem Aufbringen der Hartoxidschicht wird der Kolbenboden spanabhebend bearbeitet. Bei dem fertigen Kolben überzieht eine in herkömmlicher Weise aufgebrachte Hartoxidschicht den gesamten Kolbenboden inclusive Brennraummulde. Die Dicke der Hartoxidschicht liegt zwischen 50 und 90 μm. Eine Kornfeinung im Sinne der Erfindung beschränkt sich auf die Bereiche 2, die direkt dem Aufprall der Brennstoffstrahlen ausgesetzt sind. Die Kornfeinung wird erreicht durch Umschmelzen des Kolbengrundmaterials. Tiefenmäßig erfolgt die Kornfeinung um ein geringes Maß tiefer als die Tiefenzone, in der das Grundmateial zur Hartoxidschicht umgewandelt wird. Der mittlere lineare Korndurchmesser des eutektischen Siliziums liegt in den korngefeinten Bereichen zwischen großer 2 und kleiner 2,5 μm. Das Umschmelzen wird bewirkt durch einen Lichtbogen, der zwischen einer Wolfram Elektrode und dem Werkstück so erzeugt wird wie es beim Wolfram-Inertgas-Schweißverfahren üblicherweise erfolgt. Das Schmelzbad ist gegen die Atmosphäre durch das Schutzgas Argon abgeschirmt.

Zur Untersuchung des Erosionsverhaltens wurde ein Versuch durchgeführt, bei dem auf einen Probekörper aus einer üblichen Kraftstoffeinspritzpumpe Dieselkraftstoff bei Raumtemperatur aufgespritzt wurde. Als Kriterium für die Erosion wurde der nach einer bestimmten Zeiteinheit gemessene Materialabtrag genommen. Danach betrug der Materialabtrag bei nicht korngefeintem Gußgefüge mit einem mittleren linearen Korndurchmesser des Al-Si-Eutektikums zwischen 5 und 8 μm 6,5 mg gegenüber 0 mg bei dem auf 2-2,5 μm gefeinten Gefüge.

Das im erfindungsgemäßen Sinne korngefeinte Gefüge weist auch noch den Vorteil auf, daß die Dicke der darauf zu erzeugenden Hartoxidschicht, die bei nicht korngefeintem üblichen Gefüge meist recht stark schwankt, in engen Toleranzen gehalten werden kann.

## Patentansprüche

1. Verfahren zur Herstellung eines Kolbens aus einer gegossenen Al-Si-Legierung mit einem mittleren linearen Korndurchmesser des eutektischen Siliziums von größer 3 μm für Verbrennungsmotoren, bei denen der Kolbenboden mit einer dem direkten Aufprall von Brennstoffstrahlen ausgesetzten Hartoxidschicht versehen ist,
dadurch gekennzeichnet,
daß im wesentlichen die von den Brennstoffstrahlen zu beaufschlagenden Zonen des aus Al-Si-Legierung bestehenden Kolbengrundmaterials, die in die Hartoxidschicht umgewandelt werden, zuvor durch Umschmelzen des Kolbengrundmaterials mit Ladungsträgerstrahlen korngefeint werden auf einen mittleren linearen Korndurchmesser des eutektischen Siliziums von weniger als 3 μm.

2. Verfahren nach Anspruch 1,
dadurch gekennzeichnet,
daß der mittlere lineare Korndurchmesser des eutektischen Siliziums des Kolbengrundmaterials weniger als 2,5 μm beträgt.

3. Verfahren nach einem der vorhergehenden Ansprüche,
dadurch gekennzeichnet,
daß das Kornfeinen auf lokal begrenzte einzelne Zonen der zu oxidierenden Oberfläche des Kolbengrundmaterials beschränkt ist.

## Claims

1. Method of manufacturing a piston from a cast Al-Si alloy having a mean linear grain diameter of the eutectic silicon exceeding 3 μm for internal combustion engines in which the piston base is provided with a hard oxide layer subjected to the direct impact of fuel jets, characterized in that essentially those zones of the piston basic material, consisting of Al-Si alloy, that are to be subjected to the fuel jets, which are to be converted into the hard oxide layer, are previously grain-refined by remelting the piston basic material by charge carrier beams to a mean linear grain diameter of the eutectic silicon of less than 3 μm.

2. Method according to Claim 1, characterized in that the mean linear grain diameter of the eutectic silicon of the piston basic material is less than 2.5 μm.

3. Method according to one of the preceding Claims, characterized in that the grain refining is restricted to locally limited individual zones of the surface to be oxidized of the piston basic material.

## Revendications

1. Procédé pour la fabrication d'un piston en alliage coulé Al-Si, comportant un diamètre linéaire moyen de grain du silicium eutectique de plus de 3 μm, pour des moteurs à explosion, dans lesquels la tête de piston est munie d'une couche d'oxyde dur directement exposée à l'impact de jets de carburant, procédé caractérisé en ce qu'essentiellement les zones, destinées à être soumises aux jets de carburant, du matériau de base du piston en alliage Al-Si, qui sont transformées en couche d'oxyde dur, subissent au préalable un traitement d'affinage de grains par fusion à nouveau, ou raffinage du matériau de base du piston à l'aide de rayons porteurs de charges, pour atteindre un diamètre linéaire moyen de grain du silicium euctectique inférieur à 3 μm.

2. Procédé selon la revendication 1, caractérisé en ce que le diamètre linéaire moyen de grain du silicium eutectique du matériau de base du piston est inférieur à 2,5 μm.

3. Procédé selon une des revendications précédentes, caractérisé en ce que l'affinage des grains est limité à des zones individuelles localement bornées de la surface à oxyder du matériau de base du piston.